# EUROPÄISCHE PATENTSCHRIFT

(11) **EP 3 174 622 B1**
(45) Veröffentlichungstag und Bekanntmachung des Hinweises auf die Patenterteilung: **01.11.2017**
(21) Anmeldenummer: 15744904.2
(22) Anmeldetag: 29.07.2015
(51) Int. Cl.: B01D 61/36, B01D 65/02

(54) **VERFAHREN ZUR REGENERATION EINER MEMBRANWAND IN EINER DESTILLATIONSVORRICHTUNG**
METHOD FOR THE REGENERATION OF A MEMBRANE WALL IN A DISTILLATION DEVICE
PROCÉDÉ DE RÉGÉNÉRATION D'UNE PAROI DE MEMBRANE DANS UN DISPOSITIF DE DISTILLATION

(30) Priorität: 29.07.2014 DE 102014110746
(43) Veröffentlichungstag der Anmeldung: 07.06.2017
(73) Patentinhaber: Major Bravo Limited, Road Town, Tortola (VG)
(72) Erfinder: WENZEL, Markus, 81925 München (DE); BÜTTNER, Sebastian, 81371 München (DE); WEISZ, Dominik, 81369 München (DE); HEINZL, Wolfgang, 83561 Ramerberg (DE)
(74) Vertreter: 2K Patentanwälte Blasberg Kewitz & Reichel
(86) Internationale Anmeldenummer: PCT/EP2015/067374
(87) Internationale Veröffentlichungsnummer: WO 2016/016301

(56) Entgegenhaltungen:
- WO-A1-2013/037088
- CN-A- 102 101 019
- DE-A1-102013 220 199
- JP-A- H05 192 543
- US-A1- 2012 048 803
- US-B1- 6 349 835

## Beschreibung

Die vorliegende Erfindung betrifft ein Verfahren zur Regeneration einer Membranwand in einer Destillationsvorrichtung.

Eine Membran ist eine dünne Struktur, die für einige Stoffe oder Phasen durchläs- sig und für andere Stoffe oder Phasen undurchlässig ist. Eine Membran kann zur stofflichen Trennung eingesetzt werden. Bei einer Membrandestillation wird eine dünne, mikroporöse und hydrophobe Struktur als Membranwand verwendet, die durchlässig für Gase, aber undurchlässig für Flüssigkeiten, insbesondere Wasser, ist. Die dünne, mikroporöse und hydrophobe Struktur kann auf einer Stützschicht aufgebracht sein, um die mechanische Festigkeit der Membranwand zu verbessern. Bei der Membrandestillation strömt eine Flüssigkeit entlang der Membranwand, wobei die leichtsiedenden Komponenten der Flüssigkeit aufgrund einer Partialdruckdifferenz durch die Membranwand verdampfen. Die Membranwand dient der Phasentrennung und ermöglicht es, eine sehr große Phasengrenzfläche für die Verdampfung zu erzeugen. Die verdampften Inhaltsstoffe werden nach dem Durchqueren der Membranwand auf der anderen Seite kondensiert und können so flüssig gewonnen und dem Prozess entzogen werden.

Innerhalb der Membranporen befindet sich während der Membrandestillation idealerweise Gas. Es kann jedoch vorkommen, dass die Membranwand benetzt wird und Flüssigkeit in die Poren der Membranwand gelangt. In diesem Fall ist der Flüssigkeitsrückhalt durch die Membranwand nicht mehr gegeben und es kann Flüssigkeit durch die Membranwand hindurchtreten.

Eine Benetzung der Membranwand kann durch Kristallisation von Salzen an der Oberfläche der Membranwand, durch Ablagerung oder durch oberflächenaktive Substanzen erfolgen, die mit der Membranwand in direkten Kontakt gelangen.

Eine von Flüssigkeit benetzte Membranwand kann einzeln oder zusammen mit der gesamten Destillationsvorrichtung ausgetauscht werden. Dies ist jedoch mit erheblichem Aufwand verbunden und stellt außerdem eine unwirtschaftliche Lösung dar.

CN 102 101 019 A offenbart ein Verfahren zur Regeneration einer Membranwand in einer Destillationsvorrichtung gemäß dem Oberbegriff von Patentanspruch 1. Die Wärme wird der Destillationsvorrichtung zugeführt, indem erwärmte Luft in den Strömungskanal eingeführt wird, was jedoch nicht über eine dampf- und flüssigkeitsundurchlässige Wand erfolgt. Dieses Verfahren zur Regeneration einer Membranwand in einer Destillationsvorrichtung kann nicht in kostengünstiger Weise umgesetzt werden und kann nicht zuverlässig durchgeführt werden.

WO 2013/037088 A1 offenbart ein Verfahren zur Regeneration einer Membranwand in einer Destillationsvorrichtung, bei dem Poren der Membran, die teilweise oder vollständig durch eine Flüssigkeit blockiert sind, durch eine auftreffende Gasströmung und mittels einer Druckdifferenz (d.h. dampfseitig befindet sich ein Unterdruck) gespült wird.

JP H05 192543 A offenbart ein Verfahren zur Regeneration einer Membranwand in einer Destillationsvorrichtung, bei dem zunächst mittels einer Wasserstoffperoxid-Lösung gespült wird, um organische Verunreinigungen in den Poren zu entfernen. Dann wird die Membran mittels eines Gebläses mit einem Gas beaufschlagt und dadurch getrocknet.

Es ist eine Aufgabe der vorliegenden Erfindung, ein verbessertes Verfahren zur Regeneration einer Membranwand in einer Destillationsvorrichtung zu schaffen, das kostengünstig und zuverlässig realisiert werden kann und bei welchem die mit Flüssigkeit benetzte Membranwand während ihrer Regeneration in der Destillationsvorrichtung verbleiben kann.

Diese Aufgabe wird durch ein Verfahren mit den Merkmalen des Anspruchs 1 gelöst. Weitere vorteilhafte Ausführungsformen sind Gegenstand der Unteransprüche.

Ein erfindungsgemäßes Verfahren dient der Regeneration einer Membranwand in einer Destiliationsvorrichtung. Erfindungsgemäß wird dazu eine Destillationsvorrichtung mit einer oder mehreren Verdampfungs- und Kondensationsstufen bereitgestellt. Jede Verdampfungsund Kondensationsstufe weist mindestens einen eine Flüssigkeit führenden Strömungskanal auf, der zumindest teilweise durch eine dampfdurchlässige und flüssigkeitsdichte Membranwand begrenzt ist. Durch die Membranwand tritt aus der Flüssigkeit entstehender Dampf hindurch.

In einem ersten Schritt wird die Flüssigkeit aus dem mindestens einen Strömungskanal entfernt, so dass die benetzte Membranwand nach dem Entfernen der Flüssigkeit aus dem mindestens einen Strömungskanal beidseitig von einer Gasatmosphäre umgeben ist. Die die Membranwand benetzende Flüssigkeit wird danach entfernt, indem die die Membranwand umgebende Gasatmosphäre derart eingestellt wird, dass der Partialdruck der Flüssigkeit in der Gasatmosphäre niedriger ist als der Dampfdruck, insbesondere der Sättigungsdampfdruck, der die Membranwand benetzenden Flüssigkeit. Weiterhin wird ein Unterdruck in der Destillationsvorrichtung erzeugt und der Destillationsvorrichtung Wärme zugeführt, um die die Membranwand umgebende Gasatmosphäre derart einzustellen, dass der Partialdruck der Flüssigkeit in der Gasatmosphäre niedriger ist als der Dampfdruck der die Membranwand benetzenden Flüssigkeit.

Erfindungsgemäß ist der mindestens eine Strömungskanal durch eine dampf- und flüssigkeitsundurchlässige Wand begrenzt, die der Membranwand gegenüberliegt, wobei die Wärme durch die dampf- und flüssigkeitsundurchlässige Wand zugeführt wird.

Zum Entfernen der Flüssigkeit aus dem mindestens einen Strömungskanal kann die Flüssigkeit aus dem mindestens einen Strömungskanal abgelassen werden oder alternativ verdampft werden.

Die Membranwand wird vorzugsweise nicht aus der Destillationsvorrichtung ausgebaut, sondern wird während der Entfernung der sie benetzenden Flüssigkeit in der Destillationsvorrichtung belassen. Folglich kann die Membranwand mit weniger Aufwand und zudem schneller regeneriert werden, als dies bei herkömmlichen Regenerationsverfahren der Fall ist.

Bei der Regeneration wird Flüssigkeit aus der Membranwand entfernt und der Flüssigkeitsrückhalt der Membranwand wird wiederhergestellt, d. h., die Hydrophobie der Membranwand wird wieder hergestellt und alle benetzungsverursachenden Stoffe werden entfernt.

Um die die Membranwand umgebende Gasatmosphäre derart einzustellen, dass der Partialdruck der Flüssigkeit in der Gasatmosphäre niedriger als der Dampfdruck der die Membranwand benetzenden Flüssigkeit ist, wird in der Destillationsvorrichtung ein Unterdruck erzeugt und der Destillationsvorrichtung wird ferner Wärme zugeführt. Dies führt zu einem Verdampfen der die Membranwand benetzenden Flüssigkeit, wenn der Partialdruck der Flüssigkeit in der Gasatmosphäre ausreichend niedrig ist. Der Unterdruck in der Destillationsvorrichtung kann beispielsweise mit Hilfe einer Vakuumpumpe erzeugt werden.

Die Wärmeenergie wird dem mindestens einen Strömungskanal durch eine dampf- und flüssigkeitsundurchlässige, aber wärmeleitende Wand zugeführt, die den mindestens einen Strömungskanal begrenzt und der Membranwand gegenüberliegt.

Eine weitere Ausgestaltung sieht vor, dass ein Luftstrom entlang der Membranwand und/oder durch die Membranwand geführt wird, um die die Membranwand umgebende Gasatmosphäre derart einzustellen, dass der Partialdruck der Flüssigkeit in der Gasatmosphäre niedriger ist als der Dampfdruck der die Membranwand benetzenden Flüssigkeit.

Bevor der Luftstrom entlang der Membranwand und/oder durch die Membranwand geführt wird, kann dieser noch erwärmt werden, um die Verdunstung der die Membran benetzenden Flüssigkeit zu beschleunigen.

Insbesondere kann der Luftstrom mit Hilfe eines Gebläses und/oder einer Vakuumpumpe erzeugt werden.

Bevor die Flüssigkeit aus der Destillationsvorrichtung entfernt wird, ist es vorteilhaft, den mindestens einen Strömungskanal mit einer Spülflüssigkeit zu spülen, um insbesondere diejenigen Stoffe aus der Destillationsvorrichtung zu entfernen, die zu einer Benetzung der Membranwand geführt haben und zu einer erneuten Benetzung führen können.

Gemäß einer Ausfuhrungsform ist der mindestens eine Strömungskanal durch die Membranwand von einem Dampfraum der jeweiligen Verdampfungs- und Kondensationsstufe getrennt. Außerdem ist der Dampf räum durch eine Kondensationswand begrenzt, an der der aus der Flüssigkeit entstehende und durch die Membranwand hindurchtretende Dampf kondensiert. Während des normalen Destillationsbetriebs der Destillationsvorrichtung strömt eine Flüssigkeit durch den mindestens einen Strömungskanal, die aufkonzentriert werden soll. Ein Teil dieser Flüssigkeit verdampft durch die Membranwand und kondensiert an der Kondensationswand.

An den Dampfraum kann zur Erzeugung des Unterdrucks in der Destillationsvorrichtung die Vakuumpumpe angeschlossen werden. Insbesondere können eine oder mehrere Zufuhrleitungen zu dem mindestens einen Strömungskanal, durch die beispielsweise im normalen Destillationsbetrieb der Destillationsvorrichtung die aufzukonzentrierende Flüssigkeit strömt, abgesperrt werden. Dies ermöglicht es, den die Membranwand umgebenden Druck ausreichend abzusenken, um eine Verdunstung der die Membranwand benetzenden Flüssigkeit zu erzielen.

Die Destillationsvorrichtung kann mehrstufig ausgebildet sein und mehrere nacheinander angeordnete Verdampfungs- und Kondensationsstufen umfassen. Eine jeweilige nachfolgende Verdampfungs- und Kondensationsstufe grenzt dabei mit ihrem mindestens einen die Flüssigkeit führenden Strömungskanal unmittelbar an die Kondensationswand der vorangehenden Verdampfungs- und Kondensationsstufe an. Diese Kondensationswand trennt somit den Dampfraum der vorangehenden Verdampfungs- und Kondensationsstufe von dem mindestens einen die Flüssigkeit führenden Strömungskanal der nachfolgenden Verdampfungs- und Kondensationsstufe und ermöglicht es, die bei der Kondensation des Dampfs frei werdende Energie auf die durch den mindestens einen Strömungskanal strömende Flüssigkeit zu übertragen.

Gemäß einer Ausfuhrungsform werden die Membranwände der mehreren nacheinander angeordneten Verdampfungs- und Kondensationsstufen sukzessive regeneriert, indem zunächst die in dem mindestens einen Strömungskanal einer der Verdampfungs- und Kondensationsstufen befindliche Flüssigkeit entfernt, insbesondere abgelassen wird, während die Strömungskanäle der vorangehenden Verdampfungs- und Kondensationsstufen mit Flüssigkeit gefüllt bleiben. Anschließend wird ein Unterdruck in der Verdampfungs- und Kondensationsstufe erzeugt, deren mindestens einer Strömungskanal entleert wurde, um die Membranwand dieser Verdampfungs- und Kondensationsstufe zu regenerieren. Nach dem Abschluss der Regeneration der Membranwand dieser Verdampfungs- und Kondensationsstufe wird die in dem mindestens einen Strömungskanal der vorangehenden Verdampfungs- und Kondensationsstufe befindliche Flüssigkeit entfernt, insbesondere abgelassen, während die Strömungskanäle der restlichen Verdampfungs- und Kondensationsstufen mit Flüssigkeit gefüllt bleiben. Danach wird ein Unterdruck in der vorangehenden Verdampfungs- und Kondensationsstufe erzeugt, um die Membranwand der vorangehenden Verdampfungs- und Kondensationsstufe zu regenerieren.

Das vorstehend beschriebene Vorgehen zur sukzessiven Regeneration der Membranwände der Verdampfungs- und Kondensationsstufen kann fortgesetzt werden, bis die Membranwand der ersten Verdampfungs- und Kondensationsstufe regeneriert wurde.

Bei der Membranwand, die zuerst regeneriert wird, kann es sich vorteilhafterweise um die Membranwand derjenigen Verdampfungs- und Kondensationsstufe handeln, die in der Reihe der Verdampfungs- und Kondensationsstufen als Letzte angeordnet ist.

Weiterhin kann zur Beschleunigung der Regeneration der Membranwände Wärmeenergie dem mindestens einen Strömungskanal der ersten Verdampfungs- und Kondensationsstufe zugeführt werden.

Gemäß einer weiteren Ausführungsform werden die Membranwände der mehreren nacheinander angeordneten Verdampfungs- und Kondensationsstufen gleichzeitig regeneriert, indem die in den Strömungskanälen der Verdampfungs- und Kondensationsstufen befindliche Flüssigkeit entfernt, insbesondere abgelassen wird und anschließend ein Luftstrom parallel in die Strömungskanäle der Ver- dampfungs- und Kondensationsstufen eingeleitet wird, der zu einer Verdunstung der die Membranwände benetzenden Flüssigkeit führt.

Wie weiter oben beschrieben wurde, kann der mindestens eine Strömungskanal durch die Membranwand von einem Dampfraum der jeweiligen Verdampfungsund Kondensationsstufe getrennt sein. Weiterhin kann der Dampfraum durch eine Kondensationswand begrenzt sein. Als Alternative dazu kann der Dampfraum auch durch eine weitere Membranwand begrenzt sein, die den Dampfraum von einem weiteren Strömungskanal trennt, durch den eine Zuglösung strömt. Die Zuglösung weist einen niedrigeren Dampfdruck als die Flüssigkeit auf, wodurch bewirkt wird, dass dem Dampfraum Feuchtigkeit durch die weitere Membranwand entzogen und die Membranwand getrocknet wird.

Die Erfindung wird nachfolgend anhand von Ausführungsbeispielen unter Bezug auf die Zeichnungen näher erläutert. In diesen zeigen:

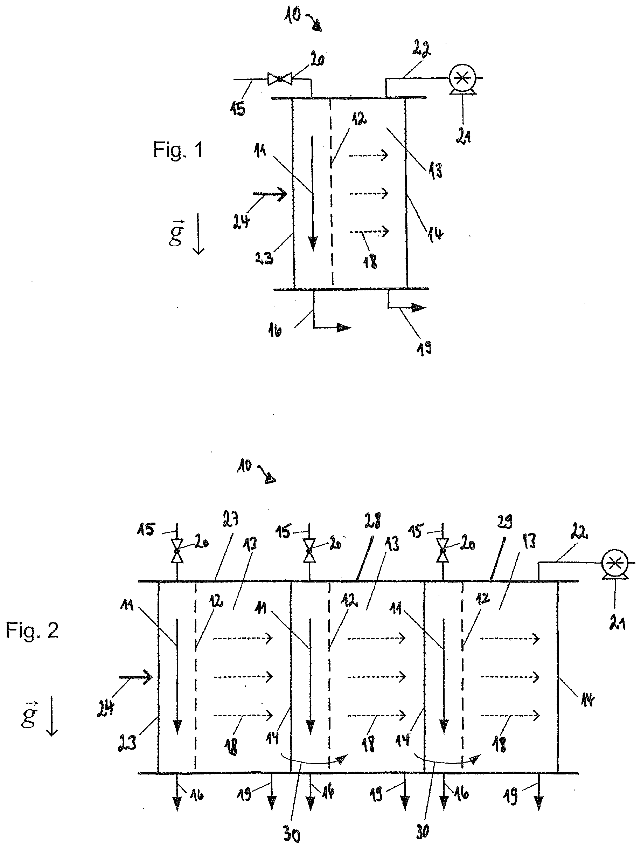

- Fig. 1: eine schematische Darstellung einer beispielhaften Ausführungsform einer Destillationsvorrichtung mit einem eine Flüssigkeit führenden Strömungskanal und einem von dem Strömungskanal durch eine Membranwand getrennten Dampfraum, wobei die Membranwand mit Hilfe eines in der Destillationsvorrichtung erzeugten Unterdrucks regeneriert wird;
- Fig. 2: eine schematische Darstellung einer beispielhaften Ausführungsform einer Destillationsvorrichtung mit mehreren hintereinander angeordneten Verdampfungs- und Kondensationsstufen, wobei die Membranwände der Verdampfungs- und Kondensationsstufen nacheinander mit Hilfe eines in der Destillationsvorrichtung erzeugten Unterdrucks regeneriert werden;

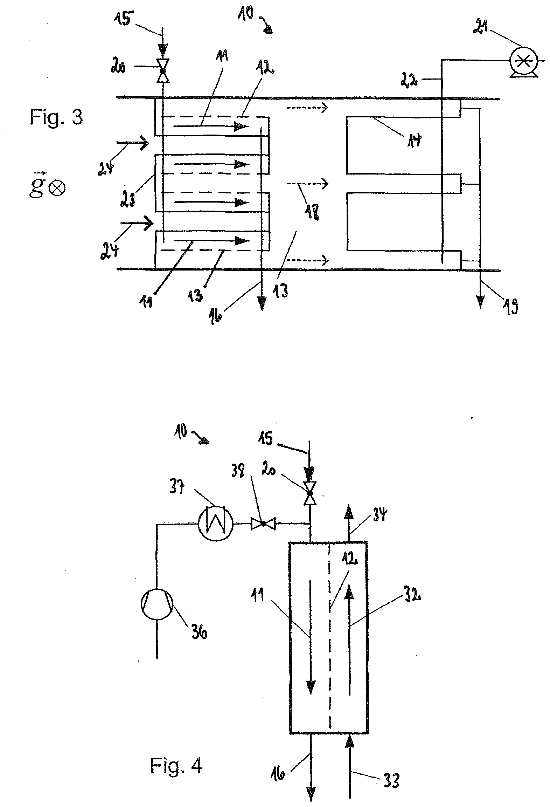

- Fig.3: eine schematische Darstellung einer beispielhaften Ausführungsform einer Destillationsvorrichtung mit mehreren parallelen Strömungskanälen, wobei die Membranwände mit Hilfe eines in der Destillationsvorrichtung erzeugten Unterdrucks regeneriert werden;
- Fig. 4: eine schematische Darstellung einer nicht erfindungsgemäßen Ausführungsform einer Destillationsvorrichtung, die einem besseren Verständnis der vorliegenden Erfindung dient, wobei die Membranwand mit Hilfe eines durch ein Gebläse erzeugten Luftstroms regeneriert wird;

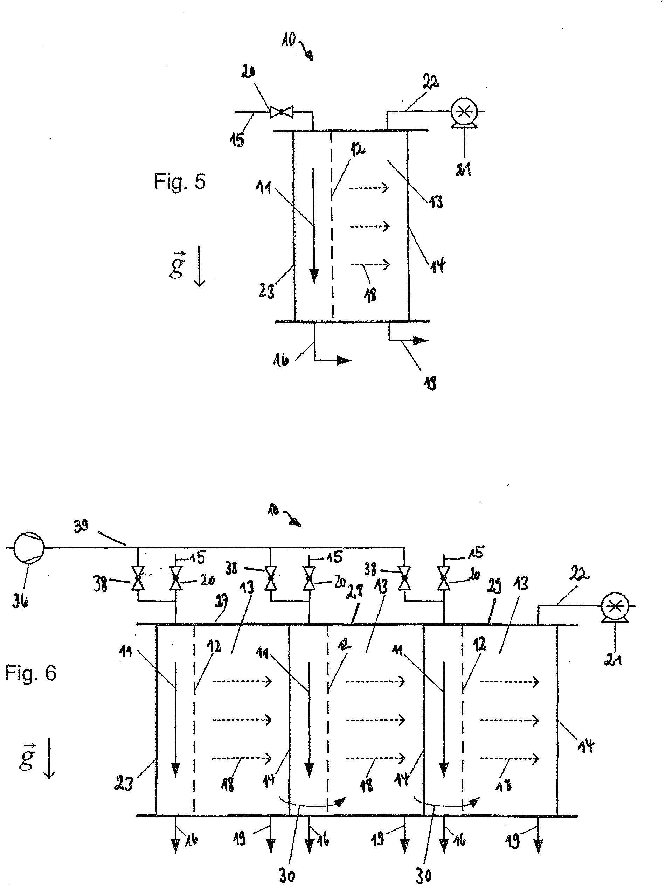

- Fig. 5: eine schematische Darstellung einer nicht erfindungsgemäßen Ausführungsform einer Destillationsvorrichtung, die einem besseren Verständnis der vorliegenden Erfindung dient, wobei die Membranwand mit Hilfe eines durch eine Vakuumpumpe erzeugten Luftstroms regeneriert wird;
- Fig. 6: eine schematische Darstellung einer nicht erfindungsgemäßen Ausführungsform einer Destillationsvorrichtung, die einem besseren Verständnis der vorliegenden Erfindung dient, wobei die Destillationsvorrichtung mehrere hintereinander angeordnete Verdampfungs- und Kondensationsstufen aufweist, wobei die Membranwände der Verdampfungs- und Kondensationsstufen mit Hilfe eines parallel in die Strömungskanäle der Verdampfungs- und Kondensationsstufen eingeleiteten Luftstroms regeneriert werden; und

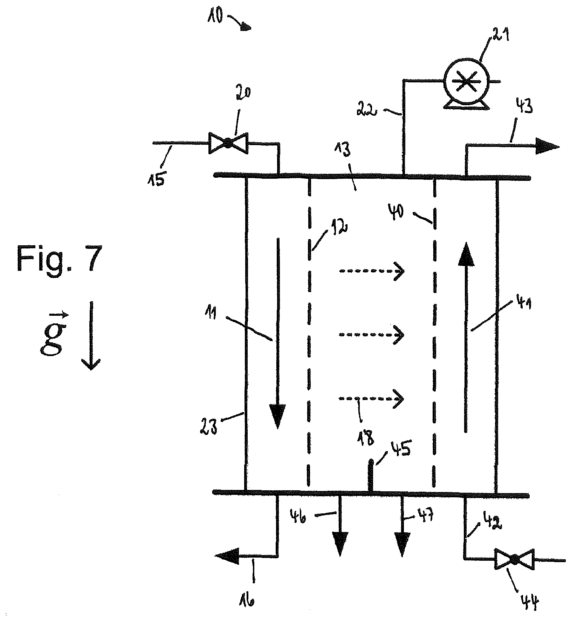

- Fig. 7: eine schematische Darstellung einer nicht erfindungsgemäßen Ausfuhrungsform einer Destillationsvorrichtung, die einem besseren Verständnis der vorliegenden Erfindung dient, wobei die Destillationsvorrichtung einen Dampfraum aufweist, der durch eine weitere Membranwand von einem weiteren Strömungskanal getrennt ist, wobei der weitere Strömungskanal von einer Zuglösung durchströmt wird.

Figur 1 zeigt in einer schematischen Seitenansicht eine beispielhafte Ausführungsform einer Destillationsvorrichtung 10 mit einer Verdampfungs- und Kondensationsstufe, anhand welcher im Folgenden eine beispielhafte Ausführungsform eines Verfahrens zur Regeneration einer Membranwand in einer Destillationsvorrichtung erläutert werden soll. Ein Vektor g zeigt in Figur 1 sowie allen weiteren Figuren die Richtung der Schwerkraft an.

Die Destillationsvorrichtung 10 besteht aus einem Strömungskanal 11 und einem durch eine mikroporöse, dampfdurchlässige, jedoch flüssigkeitsundurchlässige Membranwand 12 von dem Strömungskanal 11 getrennten Dampfraum 13. Auf der der Membranwand 12 gegenüberliegenden Seite ist der Dampfraum 13 durch eine dampf- und flüssigkeitsundurchlässige Kondensationswand 14 begrenzt. Während des Destillationsbetriebs wird dem Strömungskanal 11 eine aufzukonzentrierende Flüssigkeit über eine Zufuhrleitung 15 zugeführt. Anschließend durchläuft die aufzukonzentrierende Flüssigkeit den Strömungskanal 11 entlang der in Figur 1 durch einen Pfeil gekennzeichneten Richtung und wird über eine Auslassleitung 16 abgeführt.

Bei der Membrandestillation wird unter Einsatz von thermischer Energie ein Teil der aufzukonzentrierenden Flüssigkeit verdampft und wieder kondensiert. Bei der teilweisen Verdampfung der aufzukonzentrierenden Flüssigkeit, bei der es sich um ein Gemisch unterschiedlicher Flüssigkeiten, eine Lösung oder Emulsion handeln kann, verdampfen bei gegebener Temperatur die jeweiligen Bestandteile bei einem von dieser Temperatur abhängigen Dampfdruck, so dass einzelne Bestandteile auskondensiert werden können. Durch Temperatur- bzw. Dampfdruckunterschiede zwischen der aufzukonzentrierenden Flüssigkeit und dem Dampfraum 13 entsteht an der Grenzfläche zwischen der aufzukonzentrierenden Flüssigkeit und der Membranwand 12 Dampf, der durch die Membranwand 12 in den unmittelbar an die Membranwand 12 angrenzenden Dampfraum 13 hindurchtritt. Der Dampf strömt im Dampfraum 13, wie in Figur 1 durch Pfeile 18 dargestellt ist, zur Kondensationswand 14 und kondensiert dort.

Das an der Kondensationswand 14 durch die Kondensation des Dampfs entstehende Kondensat bzw. Destillat rinnt schwerkraftbedingt entlang der Kondensationswand 14 nach unten. Am Boden des Dampfraums 13 befindet sich ein Kondensatauslass 19, durch den das Kondensat abgeführt werden kann.

Zur Regeneration der Membranwand 12, bei der benetzende Substanzen von der Oberfläche und aus den Poren der Membranwand 12 entfernt werden, wird bei dieser Ausführungsform wie folgt vorgegangen.

Zunächst wird die Membranwand 12 mit einer Spülflüssigkeit gespült. Die Spülflüssigkeit wird dem Strömungskanal 11 über die Zufuhrleitung 15 zugeführt und über die Auslassleitung 16 abgeführt. Dabei wird ein Teil der benetzenden Substanzen bereits von und aus der Membranwand 12 entfernt. Die Membranwand 12 kann mit einer oder mehreren, nacheinander angewandten Spülflüssigkeiten gespült werden. Vorzugsweise ist die zuletzt angewandte Spülflüssigkeit klares Wasser oder eine Flüssigkeit, die vollständig verdampfen kann.

Nach dem Spülvorgang wird die Flüssigkeit aus dem Strömungskanal 11 abgelassen. Dazu wird die Zufuhrleitung 15 mittels eines Absperrventils 20 verschlossen und die sich im Strömungskanal 11 befindliche Flüssigkeit wird durch die Auslassleitung 16 abgelassen, so dass die Membranwand 12 beidseitig, d. h. sowohl auf der an den Strömungskanal 11 angrenzenden Seite als auch auf der gegenüberliegenden, im Dampfraum 13 befindlichen Seite, von einer Gasatmosphäre umgeben ist.

Nach dem Ablassen der Flüssigkeit aus der Destillationsvorrichtung 10 ist die Membranwand 12 weiterhin zumindest teilweise mit Flüssigkeit benetzt. In dem folgenden Verfahrensschritt wird diese Flüssigkeit von der Membranwand 12 entfernt. Dazu wird die die Membranwand 12 umgebende Gasatmosphäre derart eingestellt, dass der Partialdruck der Flüssigkeit in der Gasatmosphäre niedriger ist als der Sättigungsdampfdruck der die Membranwand 12 benetzenden Flüssigkeit.

Bei der hier beschriebenen Ausführungsform wird ein Unterdruck, insbesondere ein Vakuum, in der Destillationsvorrichtung 10 gegenüber dem außerhalb der Destillationsvorrichtung 10 herrschenden Umgebungsdruck mittels einer Vakuumpumpe 21 erzeugt, die an eine Entlüftungsleitung 22 des Dampfraums 13 angeschlossen ist. Der Unterdruck in der Destillationsvorrichtung 10 wird so eingestellt, dass der im Strömungskanal 11 und im Dampfraum 13 anliegende Druck niedriger ist als der Dampfdruck der im Strömungskanal 11 verbliebenen Flüssigkeit. Dadurch beginnt die restliche Flüssigkeit im Strömungskanal 11, auf der Oberfläche und in den Poren der Membranwand 12 zu verdampfen, wodurch die Membranwand 12 getrocknet und regeneriert wird.

Der durch den Unterdruck in der Destillationsvorrichtung 10 entstandene Dampf kann von der Vakuumpumpe 21 abgesaugt werden oder an der gekühlten Kondensationswand 14 im Dampfraum 13 kondensieren und über den Kondensatauslass 19 abgeführt werden.

Die Trocknung der Membranwand 12 beginnt, sobald der Partialdruck in der Gasatmosphäre geringer als der Sättigungsdampfdruck der Flüssigkeit in der Membranwand 12 ist. Während des Trocknungsvorgangs sinkt der Druck in dem an die Membranwand 12 angrenzenden Dampfraum 13, weil sich die Flüssigkeit an der Membranwand 12 abkühlt. Der Druck im Dampfraum 13 kann gemessen werden und es kann festgestellt werden, dass der Trocknungsvorgang abgeschlossen ist, wenn der Druck im Dampfraum 13 sich nicht mehr ändert.

Die Trocknung der Membranwand 12 kann beschleunigt werden, indem dem Strömungskanal 13 Wärme durch eine Wand 23 zugeführt wird, die im Strömungskanal 11 der Membranwand 12 gegenüber liegt. Die Wand 23 ist dampf- und flüssigkeitsundurchlässig, aber wärmeleitend und kann insbesondere aus dem gleichen Material bestehen wie die Kondensationswand 14. Die Wärmezufuhr ist in Figur 1 durch einen Pfeil 24 dargestellt. Die Wärmezufuhr kann beispielsweise erfolgen, indem Dampf an der Wand 23 kondensiert oder indem ein warmer Fluidstrom aus Flüssigkeit oder Gas in Kontakt mit der Wand 23 gebracht wird.

Es sei angemerkt, dass die Membranwand 12 zur Durchführung des Regenerationsverfahrens nicht aus der Destillationsvorrichtung 10 ausgebaut wird. Vielmehr wird die Membranwand 12 während des gesamten Regenerationsprozesses in der Destillationsvorrichtung 10 belassen.

Es ist weiterhin möglich, dass die Flüssigkeit nach dem Spülvorgang nicht durch die Auslassleitung 16 abgelassen wird, sondern dass das Absperrventil 20 verschlossen wird und die Flüssigkeit im Strömungskanal 11 belassen wird. Die im Strömungskanal 11 befindliche Flüssigkeit wird in diesem Fall während des Trocknungsvorgangs vollständig verdampft bzw. verdunstet. Dieses Vorgehen ist insbesondere dann vorteilhaft, wenn keine geeignete Auslassleitung 16 vorhanden ist.

Figur 2 zeigt in einer schematischen Seitenansicht eine beispielhafte Ausführungsform einer Destillationsvorrichtung 10 mit einer ersten Verdampfungs- und Kondensationsstufe 27, einer zweiten Verdampfungs- und Kondensationsstufe 28 und einer dritten Verdampfungs- und Kondensationsstufe 29.

Jede der Verdampfungs- und Kondensationsstufen 27 bis 29 ist genauso aufgebaut wie die in Figur 1 gezeigte Verdampfungs- und Kondensationsstufe. Folglich umfasst jede der Verdampfungs- und Kondensationsstufen 27 bis 29 einen Strömungskanal 11, einen Dampfraum 13, eine den Strömungskanal 11 vom Dampfraum 13 trennende Membranwand 12 und eine Kondensationswand 14.

Die zweite Verdampfungs- und Kondensationsstufe 28 grenzt mit ihrem die Flüssigkeit führenden Strömungskanal 11 unmittelbar an die Kondensationswand 14 der ersten Verdampfungs- und Kondensationsstufe 27 an. Diese Kondensationswand 14 trennt somit den Dampfraum 13 der ersten Verdampfungs- und Kondensationsstufe 27 von dem die Flüssigkeit führenden Strömungskanal 11 der zweiten Verdampfungs- und Kondensationsstufe 28. Die bei der Kondensation des Dampfs an der Kondensationswand 14 frei werdende Energie wird während des Destillationsbetriebs auf die durch den benachbarten Strömungskanal 11 fließende aufzukonzentrierende Flüssigkeit übertragen.

In gleicher Weise grenzt der Strömungskanal 11 der dritten Verdampfungs- und Kondensationsstufe 29 unmittelbar an die Kondensationswand 14 der zweiten Verdampfungs- und Kondensationsstufe 28 an. Die bei der Kondensation des Dampfs an der Kondensationswand 14 der zweiten Verdampfungs- und Kondensationsstufe 28 frei werdende Energie wird daher während des Destillationsbetriebs auf die durch den Strömungskanal 11 der dritten Verdampfungs- und Kondensationsstufe 29 fließende aufzukonzentrierende Flüssigkeit übertragen.

Die jeweils auf der linken Seite der zweiten und dritten Verdampfungs- und Kondensationsstufen 28, 29 angeordneten Kondensationswände 14 entsprechen der Wand 23 der ersten Verdampfungs- und Kondensationsstufe 27.

Weiterhin sind die Dampfräume 13 jeweils benachbarter Verdampfungs- und Konzentrationsstufen 27 bis 29 über einen jeweiligen Druckausgleichskanal 30 miteinander verbunden. Die Vakuumpumpe 21 ist über die Entlüftungsleitung 22 an den Dampfraum 13 der dritten Verdampfungs- und Kondensationsstufe 29 angeschlossen.

Obgleich dies in Figur 2 nicht dargestellt ist, können die die aufzukonzentrierende Flüssigkeit führenden Strömungskanäle 11 der Verdampfungs- und Kondensationsstufen 27 bis 29 in Reihe geschaltet sein. Dazu ist die Auslassleitung 16 des Strömungskanals 11 der ersten Verdampfungs- und Kondensationsstufe 27 mit der Zufuhrleitung 15 des Strömungskanals 11 der zweiten Verdampfungs- und Kondensationsstufe 28 verbunden, und die Auslassleitung 16 des Strömungskanals 11 der zweiten Verdampfungs- und Kondensationsstufe 28 ist mit der Zufuhrleitung 15 des Strömungskanals 11 der dritten Verdampfungs- und Kondensationsstufe 29 verbunden.

Anstelle der in Figur 2 gezeigten drei Verdampfungs- und Kondensationsstufen 27 bis 29 können auch zwei oder mehr als drei Verdampfungs- und Kondensationsstufen vorgesehen sein, die in gleicher Weise wie in Figur 2 miteinander verbunden sind.

Dadurch dass die Verdampfungs- und Kondensationsstufen 27 bis 29 hintereinander angeordnet sind, dient der in einer jeweiligen Verdampfungs- und Kondensationsstufe erzeugte Dampf zur Erwärmung der aufzukonzentrierenden Flüssigkeit in der jeweils nachfolgenden Verdampfungs- und Kondensationsstufe, da die bei der Kondensation des Dampfs an der Kondensationswand 14 frei werdende Energie durch die Kondensationswand 14 auf die den benachbarten Strömungskanal 11 durchströmende Flüssigkeit übertragen wird.

Zur Regeneration der Membranwände 12 der Verdampfungs- und Kondensationsstufen 27 bis 29 wird folgendermaßen vorgegangen.

Zunächst werden die Strömungskanäle 11 aller Verdampfungs- und Kondensationsstufen 27 bis 29 mit einer Spülflüssigkeit, insbesondere Wasser, gespült. Falls die Strömungskanäle 11 der Verdampfungs- und Kondensationsstufen 27 bis 29 seriell miteinander verbunden sind, kann die Spülflüssigkeit nacheinander durch die Strömungskanäle 11 geführt werden.

Nach dem Spülen der Strömungskanäle 11 wird der Spülflüssigkeitsfluss durch die Strömungskanäle 11 gestoppt und das Absperrventil 20 der dritten Verdampfungsund Kondensationsstufe 29, d. h., der in der Flussrichtung des Dampfs letzten Verdampfungs- und Kondensationsstufe, wird geschlossen und es wird nur der Strömungskanal 11 der dritten Verdampfungs- und Kondensationsstufe 29 entleert. Folglich ist die Membranwand 12 der dritten Verdampfungs- und Kondensationsstufe 29 beidseitig von einer Gasatmosphäre umgeben. Die Strömungskanäle 11 der ersten und zweiten Verdampfungs- und Kondensationsstufen 27, 28 sind weiterhin mit Flüssigkeit durchströmt oder gefüllt.

Mittels der an die Entlüftungsleitung 22 des Dampfraums 13 der dritten Kondensations- und Verdampfungsstufe 29 angeschlossenen Vakuumpumpe 21 kann der Unterdruck in der dritten Kondensations- und Verdampfungsstufe 29 so eingestellt werden, dass die die Membranwand 12 der dritten Kondensations- und Verdampfungsstufe 29 benetzende Flüssigkeit verdampft. Der dabei entstehende Dampf kondensiert entweder an der Kondensationswand 14 der dritten Kondensations- und Verdampfungsstufe 29 oder strömt durch die Vakuumpumpe 21 aus der Destillationsvorrichtung 10.

Da während der Trocknung der Membranwand 13 der dritten Kondensations- und Verdampfungsstufe 29 die Strömungskanäle der beiden anderen Kondensations- und Verdampfungsstufen 27, 28 noch von der Spülflüssigkeit durchströmt sind oder sich in den Strömungskanälen zumindest noch Flüssigkeit befindet, wird der entleerte Strömungskanal 11 der dritten Kondensations- und Verdampfungsstufe 29 weiterhin von dem ankommendem Dampf der vorherigen Kondensations- und Verdampfungsstufen 27, 28 bzw. der der ersten Kondensations- und Verdampfungsstufe 27 durch die Wand 23 zugeführten Wärme (vgl. hierzu Pfeil 24) erwärmt, wodurch der Trocknungsvorgang der Membranwand 12 der dritten Kondensations- und Verdampfungsstufe 29 beschleunigt wird.

Sobald die Membranwand 12 der dritten Kondensations- und Verdampfungsstufe 29 getrocknet ist, wird mit der Trocknung der Membranwand 12 der zweiten Kondensations- und Verdampfungsstufe 28 fortgefahren. Dazu wird das Absperrventil 20 der zweiten Kondensations- und Verdampfungsstufe 28 geschlossen und der zugehörige Strömungskanal 11 wird entleert. Da der Dampfraum 13 der zweiten Kondensations- und Verdampfungsstufe 28 über den Druckausgleichskanal 30 mit dem Dampfraum 13 der dritten Kondensations- und Verdampfungsstufe 29 verbunden ist, stellt sich auch beidseits der Membranwand 13 der zweiten Kondensations- und Verdampfungsstufe 28 der durch die Vakuumpumpe 21 erzeugte Druck ein und die Membranwand 12 der zweiten Kondensations- und Verdampfungsstufe 28 wird getrocknet.

Da während der Trocknung der Membranwand 13 der zweiten Kondensations- und Verdampfungsstufe 28 weiterhin der Strömungskanal 11 der ersten Kondensations- und Verdampfungsstufe 27 von der Spülflüssigkeit durchströmt ist oder zumindest mit Flüssigkeit gefüllt ist, wird Wärme auf den Strömungskanal 11 der zweiten Kondensations- und Verdampfungsstufe 28 übertragen, wodurch die Trocknung der Membranwand 12 der zweiten Kondensations- und Verdampfungsstufe 28 beschleunigt wird.

Sobald die Membranwand 12 der zweiten Kondensations- und Verdampfungsstufe 28 getrocknet ist, wird schließlich der Strömungskanal 11 der ersten Kondensations- und Verdampfungsstufe 27 entleert und die zugehörige Membranwand 12 getrocknet, indem auch beidseits dieser Membranwand 12 der für die Verdunstung der die Membranwand 12 benetzenden Flüssigkeit erforderliche Druck mit Hilfe der Vakuumpumpe 21 erzeugt wird. Zur Beschleunigung des Trocknungsvorgangs wird dem Strömungskanal 11 der ersten Kondensations- und Verdampfungsstufe 27 von außen Wärme zugeführt (vgl. den Pfeil 24).

Figur 3 zeigt in einer schematischen Draufsicht eine beispielhafte Ausführungsform einer Destillationsvorrichtung 10 als Weiterbildung der in Figur 1 gezeigten Destillationsvorrichtung. Die Destillationsvorrichtung 10 nach Figur 3 umfasst mehrere zueinander parallele, die aufzukonzentrierende Flüssigkeit führende Strömungskanäle 11, die jeweils durch eine dampfdurchlässige, jedoch flüssigkeitsundurchlässige Membranwand 12 von demselben Dampfraum 13 getrennt sind. Die Strömungskanäle 11 werden von derselben Zufuhrleitung 15 gespeist. In Figur 3 ist die Kondensationswand 14 außerdem so ausgestaltet, dass sie mehrfach in der Dampfraum 13 hineinragt, um die für die Kondensation des Dampfs zur Verfügung stehende Gesamtoberfläche zu vergrößern.

Die Regeneration der Membranwand 12 erfolgt in der gleichen Weise wie bei der in Figur 1 gezeigten Destillationsvorrichtung 10. Demnach werden die Membranwände 12 zuerst mit einer Spülflüssigkeit gespült. Nach dem Spülvorgang wird die Spülflüssigkeit aus den Strömungskanälen 11 abgelassen, indem das Absperrventil 20 verschlossen wird. Nach dem Ablassen der Spülflüssigkeit aus der Destillationsvorrichtung 10 kann auf beiden Seiten der jeweiligen Membranwand 12 mit Hilfe der Vakuumpumpe 21 ein Unterdruck erzeugt werden, der zu einem Verdampfen der die Membranwände 12 benetzenden Flüssigkeit führt. Weiterhin kann die Trocknung der Membranwände 12 beschleunigt werden, indem den Strömungskanälen 13 Wärme durch die stoffundurchlässige, aber wärmeleitende Wand 23 zugeführt wird.

Figur 4 zeigt in einer schematischen Seitenansicht eine nicht erfindungsgemäße Ausführungsform einer Destillationsvorrichtung 10, welche als Direktkontaktmembrandestillationsvorrichtung (DCMD; Direct Contact Membrane Distillation) ausgestaltet ist.

Die Destillationsvorrichtung 10 besteht aus einem von einer aufzukonzentrierenden Flüssigkeit durchströmten Strömungskanal 11, einem von einer zu verdünnenden Flüssigkeit durchströmten Strömungskanal 32 und einer die beiden Strömungskanäle 11, 32 trennenden mikroporösen, dampfdurchlässigen, jedoch flüssigkeitsundurchlässigen Membranwand 12.

Dem Strömungskanal 11 wird die aufzukonzentrierende Flüssigkeit während des Destillationsbetriebs über eine Zufuhrleitung 15 zugeführt, die mit Hilfe eines Absperrventils 20 verschlossen werden kann. Die aufzukonzentrierende Flüssigkeit durchläuft den Strömungskanal 11 entlang der in Figur 4 durch einen Pfeil gekennzeichneten Richtung und wird über eine Auslassleitung 16 abgeführt.

Die zu verdünnende Flüssigkeit wird dem Strömungskanal 32 über eine Zufuhrleitung 33 zugeführt und über eine Auslassleitung 34 abgeführt. Die zu verdünnende Flüssigkeit durchläuft die Destillationsvorrichtung in entgegengesetzter Richtung zur aufzukonzentrierenden Flüssigkeit.

Bei der hier angewendeten Direktkontaktmembrandestillation verdampft ein Teil der aufzukonzentrierenden Flüssigkeit in dem Strömungskanal 11 und gelangt durch die Membranwand 12 in den Strömungskanal 32, wo der Dampf in die zu verdünnende Flüssigkeit kondensiert.

Zur Regeneration der Membranwand 12 werden die beiden Strömungskanäle 11, 32 zunächst mit einer Spülflüssigkeit gespült und anschließend über die Auslassleitungen 16, 34 entleert. Danach wird über die Zufuhrleitung 15 ein trockener Luftstrom in den Strömungskanal 11 eingeleitet.

Der Luftstrom wird von einem Gebläse 36 erzeugt und kann optional mit Hilfe eines dem Gebläse 36 vor- oder nachgeschalteten Lufterwärmers 37 erwärmt werden. Ferner ist ein Absperrventil 38 vorgesehen, um das Gebläse 36 und den Lufterwärmer während des normalen Betriebs der Destillationsvorrichtung 10 zur Direktkontaktmembrandestillation von dem Strömungskanal 11 trennen zu können.

Der Luftstrom trocknet die Membranwand 12 und die Flüssigkeitskanäle 11, 32 und kann durch eine oder beide Auslassleitungen 16, 34 aus der Destillationsvorrichtung 10 hinausströmen, wobei die Luft innerhalb der Destillationsvorrichtung 10 entlang und/oder durch die Membranwand 12 strömen kann.

Die Trocknung der Membranwand 12 und der Flüssigkeitskanäle 11, 32 kann durch die Erwärmung des Luftstroms mit Hilfe des Lufterwärmers 37 beschleunigt werden.

Der Trocknungsvorgang kann überwacht werden, indem die Temperatur und der Wassergehalt der in den Strömungskanal 11 einströmenden Luft und der aus dem Strömungskanal 11 ausströmenden Luft gemessen werden. Der Trocknungsvorgang ist abgeschlossen, sobald die ein- und ausströmende Luft die gleiche Temperatur und den gleichen Wassergehalt aufweisen.

Figur 5 zeigt in einer schematischen Seitenansicht eine nicht erfindungsgemäße Ausführungsform einer Destillationsvorrichtung 10, welche in ihrem Aufbau weitgehend identisch ist mit der Destillationsvorrichtung 10 aus Figur 1.

Zur Regeneration der Membranwand 12 der Destillationsvorrichtung 10 aus Figur 5 wird nach dem Spülen und Entleeren des Strömungskanals 11 allerdings anders als bei der weiter oben im Zusammenhang mit Figur 1 erläuterten Ausführungsform das Absperrventil 20 geöffnet. Ferner wird mit Hilfe der Vakuumpumpe 21 im Gehäuse der Destillationsvorrichtung 10 ein leichter Unterdruck erzeugt, der dazu führt, dass durch die Zufuhrleitung 15 trockene Umgebungsluft in den Strömungskanal 11 einströmen kann. Die einströmende Luft strömt durch die Membranwand 12 und bewirkt eine Verdunstung der die Membranwand 12 benetzenden Flüssigkeit. Die angesaugte Luftströmung wird von der Vakuumpumpe 21 aus der Destillationsvorrichtung 10 geführt.

Figur 6 zeigt in einer schematischen Seitenansicht eine nicht erfindungsgemäße Ausführungsform einer Destillationsvorrichtung 10, welche in ihrem Aufbau weitgehend identisch ist mit der Destillationsvorrichtung 10 aus Figur 2.

Im Unterschied zur Destillationsvorrichtung nach Figur 2 ist in Figur 6 jedoch ein Gebläse 36 vorgesehen, das über eine Luftleitung 39 an die Zufuhrleitungen 15 der Verdampfungs- und Kondensationsstufen 27 bis 29 angeschlossen ist. Jede der Zufuhrleitungen 15 kann mittels eines Absperrventils 38 bei Bedarf von dem Gebläse 36 entkoppelt werden.

Zur Regeneration der Membranwände 12 der Verdampfungs- und Kondensationsstufen 27 bis 29 wird folgendermaßen vorgegangen. Nach dem Spülen der Strömungskanäle 11 mit Spülflüssigkeit werden sämtliche Strömungskanäle 11 der Destillationsvorrichtung 10 entleert, so dass die Membranwände 12 der Verdampfungs- und Kondensationsstufen 27 bis 29 jeweils beidseitig von einer Gasatmosphäre umgeben sind.

Anschließend werden die Absperrventile 38 geöffnet und trockene Luft wird mit Hilfe des Gebläses 36 gleichzeitig in alle oder gezielt in einzelne der Strömungskanäle 11 der Verdampfungs- und Kondensationsstufen 27 bis 29 eingeleitet, wodurch die Membranwände 12 getrocknet werden. Optional kann die in die Strömungskanäle 11 einströmende Luft von einem Lufterwärmer erwärmt werden.

Figur 7 zeigt in einer schematischen Seitenansicht eine nicht erfindungsgemäße Ausführungsform einer Destillationsvorrichtung 10, welche in ihrem Aufbau weitgehend identisch ist mit der Destillationsvorrichtung 10 aus Figur 1. Im Unterschied zur Destillationsvorrichtung 10 nach Figur 1 wird der Dampfraum 13 in Figur 7 jedoch nicht durch eine dampf- und flüssigkeitsundurchlässige Kondensationswand 14 begrenzt, sondern eine mikroporöse, dampfdurchlässige, jedoch flüssigkeitsundurchlässige Membranwand 40 trennt den Dampfraum 13 von einem Strömungskanal 41. Der Strömungskanal 41 wird während des Destillationsbetriebs und der Trocknung der Membranwand 12 von einer Zuglösung durchströmt. Diese Zuglösung weist im Destillationsbetrieb für die zu destillierenden Stoffe einen niedrigeren Dampfdruck auf und generiert die für die Destillation notwendige Druckdifferenz. Die Zuglösung wird dem Strömungskanal 41 über eine Zufuhrleitung 42 zugeführt und über eine Auslassleitung 43 abgeführt. Zum Absperren der Zufuhrleitung 42 ist ein Absperrventil 44 vorgesehen. Die Zuglösung durchströmt den Strömungskanal 41 insbesondere in entgegengesetzter Richtung zu der den Strömungskanal 11 durchströmenden Flüssigkeit. Die Zuglösung weist einen niedrigeren Dampfdruck als die die Membranwand 12 benetzende Flüssigkeit auf. Beispielsweise ist eine hochkonzentrierte Salzwasserlösung als Zuglösung geeignet, wenn Wasser die Membranwand 12 benetzt.

Vor der Trocknung der Membranwand 12 kann die Flüssigkeit aus dem Strömungskanal 11 abgelassen werden, alternativ kann die Flüssigkeit auch im Strömungskanal 11 belassen werden und während des Trocknungsvorgangs eingedampft werden. Während des Trocknungsvorgangs durchströmt die Zuglösung den Strömungskanal 41 und bewirkt aufgrund ihres niedrigen Dampfdrucks, dass dem Dampfraum 13 Feuchtigkeit durch die Membranwand 40 entzogen wird. Dadurch wird eine Trocknung der Membranwand 12 bewirkt. Der Trocknungsvorgang kann optional durch die Vakuumpumpe 21 unterstützt werden. Der Trocknungsvorgang ist abgeschlossen, wenn sich die Temperatur und/oder die Konzentration der Zuglösung nicht mehr ändern.

Wie Figur 7 zeigt, kann der Boden des Dampfraums 13 durch einen Damm 45 in zwei Bereiche unterteilt sein, damit ein Flüssigkeitsdurchtritt eines der Strömungskanäle 11, 41 nicht den jeweils anderen Strömungskanal 11, 41 kontaminiert. Auf beiden Seiten des Damms 45 sind Auslassleitungen 46, 47 vorgesehen, um die durch die Membranwände 12, 40 gelangte Flüssigkeit abführen zu können.

### Bezugszeichenliste

- 10: Destillationsvorrichtung
- 11: Strömungskanal
- 12: Membranwand
- 13: Dampfraum
- 14: Kondensationswand
- 15: Zufuhrleitung
- 16: Auslassleitung
- 18: Pfeil
- 19: Kondensatauslass
- 20: Absperrventil
- 21: Vakuumpumpe
- 22: Entlüftungsleitung
- 23: Wand
- 24: Pfeil
- 27: erste Verdampfungs- und Kondensationsstufe
- 28: zweite Verdampfungs- und Kondensationsstufe
- 29: dritte Verdampfungs- und Kondensationsstufe
- 30: Druckausgleichskanal
- 32: Strömungskanal
- 33: Zufuhrleitung
- 34: Auslassleitung
- 36: Gebläse
- 37: Lufterwärmer
- 38: Absperrventil
- 39: Luftleitung
- 40: Membranwand
- 41: Strömungskanal
- 42: Zufuhrleitung
- 43: Auslassleitung
- 44: Absperrventil
- 45: Damm
- 46: Auslassleitung
- 47: Auslassleitung
- g: Richtung der Schwerkraft

## Patentansprüche

1. Verfahren zur Regeneration einer Membranwand (12) in einer Destillationsvorrichtung (10), bei welchem
eine Destillationsvorrichtung (10) mit einer oder mehreren Verdampfungs- und Kondensationsstufen (27-29) bereitgestellt wird, wobei jede Verdampfungs- und Kondensationsstufe (27-29) mindestens einen eine Flüssigkeit führenden Strömungskanal (11) aufweist, der zumindest teilweise durch eine dampfdurchlässige und flüssigkeitsdichte Membranwand (12) begrenzt ist, wobei aus der Flüssigkeit entstehender Dampf durch die Membranwand (12) hindurchtritt,
die Flüssigkeit aus dem mindestens einen Strömungskanal (11) entfernt wird, wobei die Membranwand (12) nach dem Entfernen der Flüssigkeit aus dem mindestens einen Strömungskanal (11) beidseitig von einer Gasatmosphäre umgeben, aber noch von Flüssigkeit benetzt ist,
die die Membranwand (12) benetzende Flüssigkeit entfernt wird, indem die die Membranwand (12) umgebende Gasatmosphäre derart eingestellt wird, dass der Partialdruck der Flüssigkeit in der Gasatmosphäre niedriger ist als der Dampfdruck der die Membranwand (12) benetzenden Flüssigkeit, und
in der Destillationsvorrichtung (10) ein Unterdruck, insbesondere mittels einer Vakuumpumpe (21), erzeugt wird und der Destillationsvorrichtung (10) insbesondere Wärme zugeführt wird, um die die Membranwand (12) umgebende Gasatmosphäre derart einzustellen, dass der Partialdruck der Flüssigkeit in der Gasatmosphäre niedriger ist als der Dampfdruck der die Membranwand (12) benetzenden Flüssigkeit,
**dadurch gekennzeichnet, dass**
der mindestens eine Strömungskanal (11) durch eine der Membranwand (12) gegenüberliegende dampf- und flüssigkeitsundurchlässige Wand (23) begrenzt ist und der Destillationsvorrichtung (10) die Wärme durch die dampf- und flüssigkeitsundurchlässige Wand (23) zugeführt wird.

2. Verfahren nach Anspruch 1, wobei der Unterdruck in der Destillationsvorrichtung (10) mittels einer Vakuumpumpte (21) erzeugt wird.

3. Verfahren nach einem der vorhergehenden Ansprüche, wobei der mindestens eine Strömungskanal (11) mit einer Spülflüssigkeit gespült wird, bevor die Flüssigkeit aus dem mindestens einen Strömungskanal (11) entfernt wird.

4. Verfahren nach einem der vorhergehenden Ansprüche, wobei der mindestens eine Strömungskanal (11) durch die Membranwand (12) von einem Dampfraum (13) der jeweiligen Verdampfungs- und Kondensationsstufe (27-29) getrennt ist und der Dampfraum (13) durch eine Kondensationswand (14) begrenzt ist, an der der aus der Flüssigkeit entstehende und durch die Membranwand (12) hindurchtretende Dampf kondensiert.

5. Verfahren nach Anspruch 4, wobei zur Erzeugung des Unterdrucks in der Destillationsvorrichtung (10) die Vakuumpumpe (21) an den Dampfraum (13) angeschlossen wird und insbesondere eine oder mehrere Zufuhrleitungen (15) zu dem mindestens einen Strömungskanal (11) abgesperrt werden.

6. Anspruch 4 oder 5, wobei die Destillationsvorrichtung (10) mehrere nacheinander angeordnete Verdampfungs- und Kondensationsstufen (27-29) umfasst und eine jeweilige nachfolgende Verdampfungs- und Kondensationsstufe (27-29) mit ihrem mindestens einen die Flüssigkeit führenden Strömungskanal (11) unmittelbar an die Kondensationswand (14) der vorangehenden Verdampfungs- und Kondensationsstufe (27-29) angrenzt und diese Kondensationswand (14) somit den Dampfraum (13) der vorangehenden Verdampfungs- und Kondensationsstufe (27-29) von dem mindestens einen die Flüssigkeit führenden Strömungskanal (11) der nachfolgenden Verdampfungs- und Kondensationsstufe (27-29) trennt.

7. Verfahren nach Anspruch 6, wobei die Membranwände (12) der mehreren nacheinander angeordneten Verdampfungs- und Kondensationsstufen (27-29) sukzessive regeneriert werden, indem die in dem mindestens einen Strömungskanal (11) einer der Verdampfungs- und Kondensationsstufen (27-29) befindliche Flüssigkeit entfernt wird, während die Strömungskanäle (11) der vorangehenden Verdampfungs- und Kondensationsstufen (27-29) mit Flüssigkeit gefüllt bleiben, und anschließend ein Unterdruck in der Verdampfungs- und Kondensationsstufe (27-29), deren mindestens einer Strömungskanal (11) entleert wurde, erzeugt wird, um die Membranwand (12) dieser Verdampfungs- und Kondensationsstufe (27-29) zu regenerieren, und nach der Regeneration der Membranwand (12) dieser Verdampfungs- und Kondensationsstufe (27- 29) die in dem mindestens einen Strömungskanal (11) der vorangehenden Verdampfungs- und Kondensationsstufe (27-29) befindliche Flüssigkeit entfernt wird, während die Strömungskanäle (11) der restlichen Verdampfungs- und Kondensationsstufen (27-29) mit Flüssigkeit gefüllt bleiben, und anschließend ein Unterdruck in der vorangehenden Verdampfungs- und Kondensationsstufe (27-29) erzeugt wird, um die Membranwand (12) der vorangehenden Verdampfungs- und Kondensationsstufe (27-29) zu regenerieren.

8. Verfahren nach Anspruch 7, wobei die sukzessive Regeneration der Membranwände (12) der Verdampfungs- und Kondensationsstufen (27-29) fortgesetzt wird, bis die Membranwand (12) der ersten Verdampfungs- und Kondensationsstufe (27) regeneriert wurde.

9. Verfahren nach Anspruch 7 oder 8, wobei die Membranwand (12) der letzten Verdampfungs- und Kondensationsstufe (29) als erste Membranwand (12) regeneriert wird.

10. Verfahren nach einem der Ansprüche 7 bis 9, wobei während der sukzessive Regeneration der Membranwände (12) der Verdampfungs- und Kondensationsstufen (27-29) dem mindestens einen Strömungskanal (11) der ersten Verdampfungs- und Kondensationsstufe (27) Wärmeenergie zugeführt wird.

11. Verfahren nach einem der vorhergehenden Ansprüche, wobei die Membranwand (12) während der Entfernung der sie benetzenden Flüssigkeit in der Destillationsvorrichtung (10) belassen wird.

## Claims

1. A process for the regeneration of a membrane wall (12) in a distillation apparatus (10), wherein
a distillation apparatus (10) comprising one or more evaporation and condensation stages (27-29) is provided, wherein each evaporation and condensation stage (27-29) comprises at least one flow channel (11) conducting a liquid, which is confined at least partially by a vapor-permeable and liquid-impermeable membrane wall (12), wherein a vapor emerging from the liquid passes through the membrane wall (12),
the liquid is removed from the at least one flow channel (11), wherein the membrane wall (12) is surrounded on both sides by a gas atmosphere but is still wetted by liquid, after the removal of the liquid from the at least one flow channel (11),
the liquid wetting the membrane wall (12) is removed by adjusting the gas atmosphere surrounding the membrane wall (12) in such a manner that the partial pressure of the liquid in the gas atmosphere is lower than the vapor pressure of the liquid wetting the membrane wall (12), and
a negative pressure is generated in the distillation apparatus (10) and heat is fed to the distillation apparatus (10) for adjusting the gas atmosphere surrounding the membrane wall (12) such that the partial pressure of the liquid in the gas atmosphere is lower than the vapor pressure of the liquid wetting the membrane wall (12),
**characterized in that** the at least one flow channel (11) is confined by a vapor-impermeable and liquid-impermeable wall (23), which is disposed opposite to the membrane wall (12), and that the heat is fed to the distillation apparatus (10) via the vapor-impermeable and liquid-impermeable wall (23).

2. The process according to claim 1, wherein the negative pressure is generated in the distillation apparatus (10) by means of a vacuum pump (21).

3. The process according to any of the preceding claims, wherein the at least one flow channel (11) is rinsed with a rinsing liquid before the liquid is removed from the at least one flow channel (11).

4. The process according to any of the preceding claims, wherein the at least one flow channel (11) is separated from a vapor chamber (13) of the respective evaporation and condensation stage (27-29) by the membrane wall (12) and the vapor chamber (13) is confined by a condensation wall (14) where the vapor emerging from the liquid and passing through the membrane wall (12) is condensed.

5. The process according to claim 4, wherein the vacuum pump (21) is connected to the vapor chamber (13) and in particular one feed line or a plurality of feed lines (15) to the at least one flow channel (11) is shut off, for generating the negative pressure in the distillation apparatus (10).

6. The process according to claim 4 or 5, wherein the distillation apparatus (10) comprises a plurality of evaporation and condensation stages (27-29) disposed one after the other and a respective subsequent evaporation and condensation stage (27-29) with its at least one flow channel (11) conducting the liquid is directly adjacent to the condensation wall (14) of the preceding evaporation and condensation stage (27-29) and this condensation wall (14) thus separates the vapor chamber (13) of the preceding evaporation and condensation stage (27-29) from the at least one flow channel (11) conducting the liquid of the subsequent evaporation and condensation stage (27-29).

7. The process according to claim 6, wherein the membrane walls (12) of the plurality of evaporation and condensation stages (27-29) disposed one after the other are regenerated successively by removing the liquid present in the at least one flow channel (11) of one of the evaporation and condensation stages (27-29) while the flow channels (11) of the preceding evaporation and condensation stages (27-29) remain filled with liquid, and by generating afterwards a negative pressure in the evaporation and condensation stage (27-29) with the at least one flow channel (11) being discharged from liquid, for regenerating the membrane wall (12) of said evaporation and condensation stage (27-29), and the liquid present in said at least one flow channel (11) of the preceding evaporation and condensation stage (27-29) is removed after the regeneration of the membrane wall (12) of said evaporation and condensation stage (27-29) while the flow channels (11) of the remaining evaporation and condensation stages (27-29) remain filled with liquid, and subsequently a negative pressure is generated in the preceding evaporation and condensation stage (27-29) for regenerating the membrane wall (12) of the preceding evaporation and condensation stage (27-29).

8. The process according to claim 7, wherein the successive regeneration of the membrane walls (12) of the evaporation and condensation stages (27-29) is continued until the membrane wall (12) of the first evaporation and condensation stage (27) has been regenerated.

9. The process according to claim 7 or 8, wherein the membrane wall (12) of the last evaporation and condensation stage (29) is regenerated as the first membrane wall (12).

10. The process according to any of claims 7 to 9, wherein the heat is fed to the at least one flow channel (11) of the first evaporation and condensation stage (27) via the vapor-impermeable and liquid-impermeable wall (23) during the successive regeneration of the membrane walls (12) of the evaporation and condensation stages (27-29).

11. The process according to any of the preceding claims, wherein the membrane wall (12) remains in the distillation apparatus (10) during the removal of the liquid wetting the membrane wall.

## Revendications

1. Procédé pour la régénération d'une paroi de membrane (12) dans un appareil de distillation (10), dans lequel
un appareil de distillation (10) comprenant un ou plusieurs étages d'évaporation et de condensation (27-29), dans lequel chaque étage d'évaporation et de condensation (27-29) comporte au moins un canal d'écoulement (11) pour l'écoulement d'un liquide, lequel est au moins partiellement délimité par une paroi de membrane (12) étanche aux liquides et perméable à la vapeur, dans lequel une vapeur extraite du liquide passe au travers de la paroi de membrane (12),
le liquide est retiré du ou des canaux d'écoulement (11), dans lequel la paroi de membrane (12) est entourée des deux côtés d'une atmosphère gazeuse mais est encore humidifiée par le liquide, à la suite du retrait du liquide du ou des canaux d'écoulement (11),
le liquide mouillant la paroi de membrane (12) est retiré par le réglage de l'atmosphère gazeuse entourant la paroi membrane (12) de telle manière que la pression partielle du liquide au sein de l'atmosphère gazeuse est inférieure à la pression de vapeur du liquide mouillant la paroi de membrane (12), et
une pression négative est générée dans l'appareil de distillation (10) et de la chaleur est apportée à l'appareil de distillation (10) pour ajuster l'atmosphère gazeuse entourant la paroi de membrane (12) de telle façon que la pression partielle du liquide dans l'atmosphère gazeuse est inférieure à la pression de vapeur du liquide mouillant la paroi de membrane (12),
**caractérisé en ce que** le ou les canaux d'écoulement (11) est/sont confiné(s) par une paroi étanche aux liquides mais perméable à la vapeur (23), qui est disposée à l'opposé de la paroi de membrane (12), et **en ce que** la chaleur est apportée à l'appareil de distillation (10) via la paroi étanche aux liquides mais perméable à la vapeur (23).

2. Le procédé selon la revendication 1, dans lequel la pression négative est produite dans l'appareil de distillation (10) au moyen d'une pompe à vide (21).

3. Le procédé selon l'une quelconque des revendications précédentes, **caractérisé en ce que** le ou les canaux d'écoulement (11) est/sont rincé(s) avec un liquide de rinçage avant que le liquide n'y soit retiré.

4. Le procédé selon l'une quelconque des revendications précédentes, dans lequel le ou les canaux d'écoulement (11) est/sont séparé(s) d'une chambre de vapeur (13) de l'étage respectif d'évaporation et de condensation (27-29) par la paroi de membrane (12) et la chambre de vapeur (13) est confinée par une paroi de condensation (14) où se condense la vapeur produite par le liquide et passant par la paroi de membrane (12).

5. Le procédé selon la revendication 4, dans lequel la pompe à vide (21) est connectée à la chambre de vapeur (13) et notamment une ligne d'alimentation ou une pluralité de lignes d'alimentation (15) est fermé vers le ou les canaux d'écoulement (11), pour générer une pression négative dans l'appareil de distillation (10).

6. Le procédé selon la revendication 4 ou 5, dans lequel l'appareil de distillation (10) comprend une pluralité d'étages d'évaporation et de condensation (27-29) disposés les uns à la suite des autres, et un étage d'évaporation et la condensation subséquent respectif (27-29) avec son ou ses canaux d'écoulement (11) pour l'écoulement du liquide qui est directement adjacent à la paroi de condensation (14) de l'étage d'évaporation et de condensation (27-29) précédent et cette paroi de condensation (14) sépare ainsi la chambre de vapeur (13) de l'étage d'évaporation et de condensation (27-29) précédent le ou les canaux d'écoulement (11) pour l'écoulement du liquide de l'étage d'évaporation et de condensation successif.

7. Le procédé selon la revendication 6, dans lequel les parois de la membrane (12) de la pluralité d'étages d'évaporation et de condensation (27-29) disposés les uns à la suite des autres sont régénérés successivement par l'élimination du liquide présent dans le ou les canaux d'écoulement de l'un des étages d'évaporation et de condensation (27-29) tandis que les canaux d'écoulement (11) des étages d'évaporation et de condensation précédents (27-29) restent remplis de liquide, et par la génération postérieurement d'une pression négative au sein de l'étage d'évaporation et de condensation (27-29) avec le ou les canaux d'écoulement (11) libéré(s) de liquide, pour la régénération de la paroi de membrane (12) dudit étage d'évaporation et de condensation (27-29), et le liquide présent dans ledit canal ou lesdits canaux d'écoulement (11) de l'étage d'évaporation et de condensation précédent (27-29) est retiré à la suite de la régénération de la paroi de membrane (12) dudit étage d'évaporation et de condensation (27-29) tandis que les canaux d'écoulement (11) des étages d'évaporation et de condensation restants (27-29) restent remplis de liquide, et subséquemment une pression négative est générée dans l'étage d'évaporation et de condensation précédent (27-29) pour la régénération de la paroi de membrane (12) de l'étage d'évaporation et de condensation (27-29) précédent.

8. Le procédé selon la revendication 7, dans lequel la régénération successive des parois de membrane (12) des étages d'évaporation et de condensation (27 - 29) est poursuivie jusqu'à la régénération de la paroi de membrane (12) du premier étage d'évaporation et de condensation (27).

9. Le procédé selon la revendication 7 ou 8, **caractérisé en ce que** la paroi de membrane (12) du dernier étage d'évaporation et de condensation (29) est régénérée en tant que première paroi de membrane (12).

10. Le procédé selon l'une quelconque des revendications 7 à 9, dans lequel la chaleur est apportée au canal ou aux canaux d'écoulement (11) du premier étage d'évaporation et de condensation (27) via la paroi étanche aux liquides mais perméable à la vapeur (23) durant la régénération successive des parois de membrane (12) des étages d'évaporation et de condensation (29-27).

11. Le procédé selon l'une quelconque des revendications précédentes, dans lequel la paroi de membrane (12) reste au sein de l'appareil de distillation (10) durant le retrait du liquide mouillant la paroi de membrane.
